# EUROPEAN PATENT APPLICATION

(11) **EP 0 934 694 A1**
(43) Date of publication of application: **11.08.1999**
(21) Application number: 99200269.1
(22) Date of filing: 01.02.1999
(51) Int. Cl.: A01K 1/00, A01K 1/02, A01K 5/02

(54) **Feeding device for cattle**

(30) Priority: 09.02.1998 NL 1008244
(71) Applicant: Idento Electronics B.V., 8316 PV Marknesse (NL)
(72) Inventor: Giesen, Jurgen Gregorius Josephus Henricus, 8317 PK Kraggenburg (NL); Van der Lingen, Daniel Daan, 8061 BP Hasselt (NL); Hofman, Meeuwis Dirk, 4191 DM Geldermalsen (NL)
(74) Representative: 't Jong, Bastiaan Jacobus

(57) **Abstract**

The invention relates to a feeding device (1) for selectively feeding cattle, comprising: a fence (2) with a controllable gate (3) and a control (4) for the gate, which control is adapted for selective opening of the gate; and a blocking connected to the gate which prevents opening of the gate at least during closing thereof.

## Description

The present invention relates to a feeding device for selectively feeding cattle, comprising a fence with a controllable gate and a control for the gate, which control is adapted for selective opening of the gate.

Such a feeding device is generally provided with identification means close to the gate for providing access to an individual animal wishing to gain access for itself to the actual feeding location enclosed by the fence, this only when the relevant animal is still entitled to fodder. The identification means herein respond for instance to a transponder to establish the identity of the individual animal and, after determining whether the animal in question still has an "entitlement" to fodder, to release the control or set it into operation. A sensor is also arranged in the fence to detect whether the relevant animal has walked on sufficiently far to re-close the gate, for which purpose the control is once again set into operation. This is in order to prevent more animals being able to enter the feeding device simultaneously, wherein the function of the feeding device, i.e. control of the quantity of fodder provided to each animal, is obstructed.

A drawback of the known feeding device is that particularly heavy and strong animals such as pigs are capable of pushing their way through the gate behind a predecessor by forcing open the gate which is closing behind the predecessor. The gate is herein generally susceptible hereto, particularly before it has reached the fully closed position.

The present invention has for its object to obviate the above stated drawback and a feeding device is provided for this purpose which is distinguished by a blocking connected to the gate which prevents opening of the gate at least during closing thereof. Herewith is prevented in efficient manner that an animal can force its way into the feeding device a short distance behind a predecessor. The blocking can here form part of a locking which ensures that a closed gate remains in closed position, or can be a mechanism separate therefrom. The blocking prevents the possibility of a still partially opened gate being prized open by an animal exerting force on the gate through the still opened passage thereof.

In a first embodiment a feeding device according to the present invention has the property that the blocking is at least connected to the control. By connecting the blocking and the control a compact and robust configuration is obtained which is virtually insensitive to actions undertaken by the animals.

In a second embodiment a feeding device according to the present invention has the property that the blocking comprises an engaging means, the operation of which is dependent on the direction of movement of the gate. During operation of the engaging means in the case of a movement of the gate to the closed position hereof and not in the case of movement of the gate towards the opened position, the operation of the gate together with the control is not obstructed during the opening of the gate while the possibility of the gate being forced open during a movement to the closed position hereof is prevented in effective manner.

Such a feeding device preferably has the property that the engaging means comprises a tilting beam and a counter-element displaceable relative to the tilting beam and is adapted such that when the direction of movement of the gate is reversed, at least in the direction of movement to the closed position hereof, the tilting beam and the counter-element mutually engage. With such a configuration the movement of the gate substantially in the direction towards the closed position hereof is subject to the action of the engaging means and an adequate safeguard is provided against the forced entry of animals which should be excluded.

Depending on the direction of movement the tilting beam can herein have a pointed part or a rounding in contact with the surface of the counter-element, wherein the counter-element can have a rough surface, such as a toothing, directed toward the tilting beam.

In embodiments with the tilting beam, this latter is preferably connected to a resilient stabilizer which exerts on the tilting beam a force directed toward a state of equilibrium. The stabilizer preferably exerts on the tilting beam a force directing the pointed part toward the surface of the counter-element in embodiments of tilting beams with a pointed part and possibly a rounding in contact with the counter-element.

The invention will be further described on the basis of an embodiment with reference to the annexed drawing, in which:
fig. 1 shows a perspective view of a feeding device according to the present invention;
fig. 2 shows in top view a detail of the device depicted in fig. 1; and
fig. 3 shows a view corresponding with fig. 2.

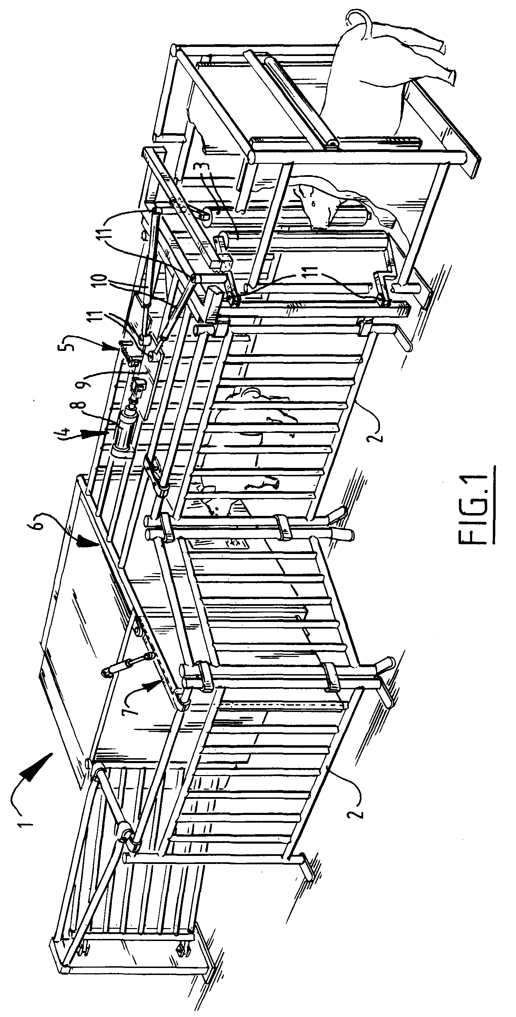

The feeding device 1 shown in fig. 1 substantially comprises a fence 2 with a gate 3. Gate 3 can be opened hingedly over hinges 11 using a control 4, of which a cylinder 8 forms part which is connected by means of a coupling plate 9 and hinges 11 arranged thereon to control rods 10, which are in turn connected to gate 3 by means of hinges 11. Feeding device 1 otherwise also comprises a dispensing device 6 and a door 7, wherein door 7 serves as exit.

The fence serves to prevent unauthorized access and feeding by animals, here pigs. Feeding device 1 comprises for this purpose a sensor (not shown) which is suitable for reading for instance a transponder in order to determine the identity of the individual animal standing in front of the closed gate.

When it has been established that the animal in front of the gate is still entitled to fodder, cylinder 8 is set into operation to open gate 3 via pull rods 10 and coupling plate 9.

Another sensor (not shown) between gate 3 and cylinder 4 detects when the relevant animal has fully entered the fencing 3 and subsequently closes gate 3 by driving cylinder 8.

When the animal has consumed the fodder released at dispensing device 6, it can freely leave the space close to dispensing device 6 via door 7. Also arranged at the dispensing device is a sensor (not shown) which detects whether an animal is still present in the vicinity thereof. Signals from the two sensors bring about that, in response to a signal from these sensors, the control 4 is once again released in order to admit another animal into the space close to the dispensing device.

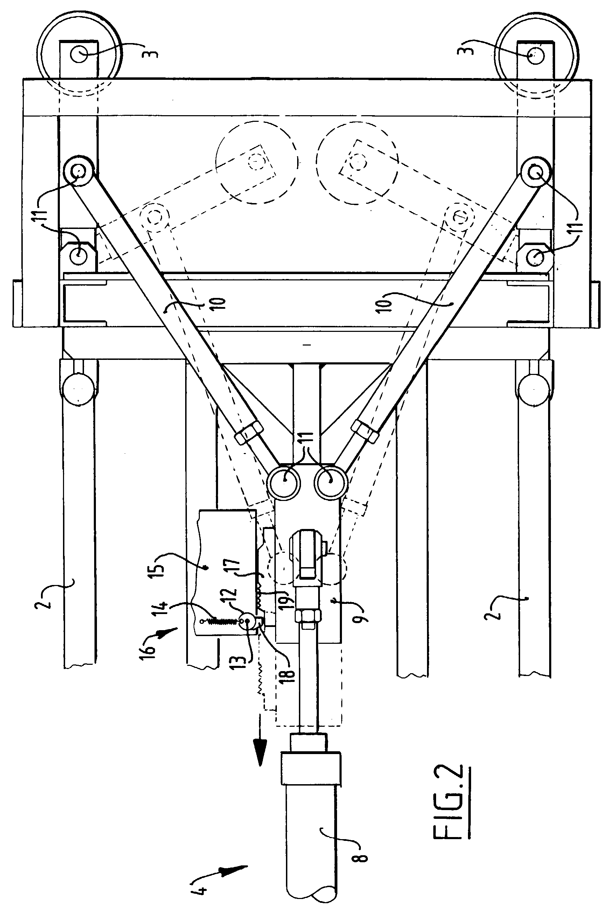

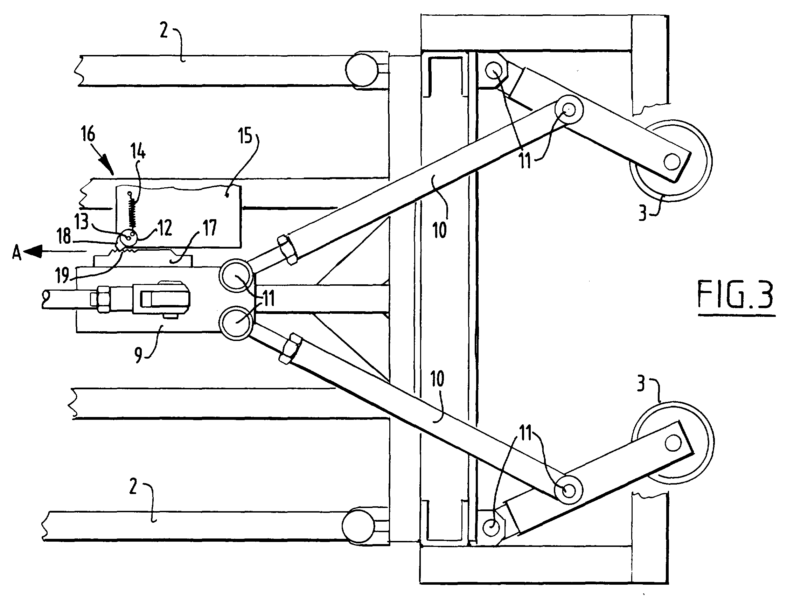

Feeding device 1 is further provided with a blocking, which here is designated schematically with reference numeral 5 and which will be further described hereinbelow with reference to fig. 2 and 3. When an animal walks through the gate 3 which has been opened for this one particular animal, another animal may be following behind at a short distance. As a result the animal walking behind can make use of the moment when gate 3 is not yet fully closed behind the leading animal. Some types of livestock, such as pigs, are so deft at providing themselves with food that a pursuing animal lays its head on the body of a leading animal to thus make optimum use of a position wherein gate 3 is opened as wide as possible. However, the blocking prevents the pursuing animal being able to force the closing gate 3 and gain access to dispensing device 6.

Many different embodiments of the blocking 5 are possible within the scope of the present invention. An embodiment will be described hereinbelow with reference to figures 2 and 3.

Fig. 2 shows that the blocking designated 5 in fig. 1 is designed as engaging means 16 which consists of a plate 15 fixed to fence 2 and having thereon a tilting block 12 which is embodied as tilting beam and is pivotable round a tilting shaft 13 and is pulled to the position shown here using a spring 14 tensioned between a fastening on plate 15 and tilting block 12. This position of tilting block 12 relative to plate 15 is reached in a fully opened as well as in a fully closed position of gate 3.

The full lines show the configuration in the opened position of gate 3, while the dashed lines show the situation of the configuration in the case of a closed gate 3. In order to close gate 3 the coupling plate 9 is pulled in the direction of arrow A by driving cylinder 8, wherein tilting block 12 is dragged over a counter-element 17. A pointed part of protrusion 18 on tilting block 12 herein runs over the surface of counter-element 17 directed towards tilting block 12.

When the closing of gate 3 is prevented or obstructed in the position, shown in fig. 3, of the configuration shown in fig. 2, tilting block 12 is turned on tilting shaft 13 to the position thereof relative to plate 15 as shown in this fig. 3. The pointed part of protrusion 18 herein lies in a toothing 19 on the surface of counter-element 17 directed towards tilting block 12. Thus is achieved that while further closing of gate 3 is indeed obstructed, for instance because an animal has placed its shoulders between gate 3, further reopening of gate 3 is impossible owing to the engagement of the pointed part of protrusion 18 in toothing 19. The pursuing animal cannot therefore force entry.

When gate 3 is fully closed, the position shown in fig. 2 in broken lines is reached, wherein spring 14 ensures that tilting block 12 returns once again to the original position hereof relative to plate 15.

When gate 3 is subsequently re-opened, cylinder 8 drives the configuration in the direction opposite to arrow A. Tilting block 12 is herein rotated on tilting shaft 13 in the direction opposite to the position shown in fig. 3. With a further movement of counter-element 17 in the direction opposite to that of arrow A, a blunt edge of protrusion 18 slides over toothing 19, so that this movement can take place without obstruction by tilting block 12.

The toothing 19 covers only that part of the surface of counter-element 17 directed toward tilting block 12 which corresponds with those partially opened positions of gate 3 wherein it is possible for an animal to partly enter gate 3 and to attempt to force gate 3.

Many alternative embodiments of the present invention will now occur to the skilled person after perusal of the foregoing. All these alternative embodiments must be deemed as falling within the scope and protection of the appended claims. It is thus possible for a separate locking to be arranged in the device, with which gate 3 is locked in the fully closed position. The blocking according to the present invention can form an integral part thereof. Alternatively or additionally it is also possible to make use of a swivel arm as tilting beam in a configuration similar to that described with reference to fig. 2 and fig. 3, but wherein the toothing on the counter-element is in saw-tooth form. The dimensioning of the tilting beam, the distance of the tilt point of the tilting beam to the saw-tooth-shaped toothing and the angles of inclination of the saw-tooth-shaped toothing must herein be chosen with some care, so that reversal of the direction of movement of the gate during closure thereof in any case results in blocking. A random alternative can also be applied for the spring shown in fig. 2 and 3 and described above or, depending on the actual configuration of a particular embodiment, it can be omitted entirely. In some embodiments it can even be recommended, in the case of the swivel arm as tilting beam, to design the toothing in the form of a triangle (shark-toothed configuration), so that reversal of the direction of movement of the gate is blocked in both the two possible directions, so that any possible damage to the control of the gate, and in particular a motor herein, is prevented in effective manner.

## Claims

1. Feeding device for selectively feeding cattle, comprising:
- a fence with a controllable gate and a control for the gate, which control is adapted for selective opening of the gate; and
- a blocking connected to the gate which prevents opening of the gate at least during closing thereof.

2. Feeding device as claimed in claim 1, wherein the blocking is at least connected to the control.

3. Feeding device as claimed in claim 1 or 2, wherein the blocking comprises an engaging means, the operation of which is dependent on the direction of movement of the gate.

4. Feeding device as claimed in claim 3, wherein the engaging means comprises a tilting beam and a counter-element displaceable relative to the tilting beam and is adapted such that when the direction of movement of the gate is reversed, at least in the direction of movement to the closed position hereof, the tilting beam and the counter-element mutually engage.

5. Feeding device as claimed in claim 4, wherein depending on the direction of movement the tilting beam has a pointed part or a rounding in contact with the surface of the counter-element.

6. Feeding device as claimed in claim 4 or 5, wherein the counter-element has a rough surface directed toward the tilting beam.

7. Feeding device as claimed in claim 6, wherein the surface of the counter-element has a toothing.

8. Feeding device as claimed in claim 5, 6 or 7, wherein the tilting beam is connected to a resilient stabilizer which exerts on the tilting beam a force directed toward a state of equilibrium.

9. Feeding device as claimed in claims 5 and 8, wherein the stabilizer exerts on the tilting beam a force directing the pointed part toward the surface of the counter-element.

10. Blocking such as evidently intended for a feeding device as claimed in one or more than one of the foregoing claims.
